# EUROPÄISCHE PATENTSCHRIFT

(11) **EP 2 035 301 B1**
(45) Veröffentlichungstag und Bekanntmachung des Hinweises auf die Patenterteilung: **19.10.2011**
(21) Anmeldenummer: 07786991.5
(22) Anmeldetag: 02.07.2007
(51) Int. Cl.: B65G 1/137

(54) **HOCHREGAL MIT LAGERGUTANWAHL**
VERTICAL SHELF FEATURING SELECTION OF STORED MATERIAL
RAYONNAGE ÉLEVÉ À SÉLECTION DE MARCHANDISES STOCKÉES

(30) Priorität: 05.07.2006 DE 102006031054
(43) Veröffentlichungstag der Anmeldung: 18.03.2009
(73) Patentinhaber: Hänel & CO., 9450 Altstätten (CH)
(72) Erfinder: HÄNEL, Joachim, 74177 Bad Friedrichshall (DE)
(74) Vertreter: Preissner, Nicolaus
(86) Internationale Anmeldenummer: PCT/EP2007/056653
(87) Internationale Veröffentlichungsnummer: WO 2008/003683

(56) Entgegenhaltungen:
- DE-U1- 20 121 417
- DE-U1- 29 706 328

## Beschreibung

Die vorliegende Erfindung betrifft ein Lagerregal mit einer Vielzahl von übereinander angeordneten Trägerstützen zur Abstützung von Lagergutträgern, die mittels einer automatischen Beschickungs- und Entnahmevorrichtung förderbar sind, mit mindestens einer Beschickungs- und Entnahmeöffnung zur Zuführung und Entnahme der Lagergutträger und mit einem Rechner, in dem Informationen über das eingelagerte Lagergut abgespeichert sind, wobei mindestens eine Digitalkamera vorgesehen ist, die das in den Lagerguträgern aufgenommene Lagergut erfasst und wobei die digitalen Bildinformationen in dem Rechner abgespeichert und mittels einer Anzeigeeinrichtung anzeigbar sind.

Bei derartigen Lagerregalen, bei denen verschiedenartiges Lagergut eingelagert wird, ist es bekannt, die Art und Menge des in den Lagergutträgern aufgenommenen Lagergutes zu erfassen. Ebenso ist es bekannt, die Erfassung der Menge des Lagergutes automatisch über das Gewicht durchzuführen.

Die DE 201 21 417 U1 offenbart ein Lagerregal gemäß den Oberbegriff des Anspruchs 1, bei dem mindestens eine Digitalkamera vorgesehen ist, die das in den Lagergutträgern aufgenommene Lagergut erfasst. Die erhaltenen Informationen werden dann mittels eines Lagerverwaltungsprogramms in dem Rechner abgespeichert. Auf einem Monitor sind die abgespeicherten Informationen anzeigbar.

Aus der DE 297 24 869 U1 ist eine Bevorratungseinrichtung mit einem Lagerraum und mit einer verschließbaren Zugangsöffnung zu dem Lagerraum bekannt. Die Bevorratungseinrichtung weist eine optische Abbildungseinrichtung auf, deren von ihr erzeugte Abbildungen bildschirmtechnisch aufbereitet über Datenleitungen einem elektronischen Visualisierungsgerät und zur datentechnischen Aufbereitung einer Datenverarbeitungseinrichtung zugeführt sind.

DE 297 06 328 U1 betrifft ein Warensuch- und Hinweissystem, welches das Auffinden von Waren in einem Verkaufswarenregal erleichtert. Nach Eingabe von Anforderungen für die gewünschte Ware wird eine den Anforderungen möglichst weitgehend entsprechende Ware ausgesucht und ihr Lagerort in dem Verkaufswarenregal gekennzeichnet.

DE 93 01 327 U1 offenbart eine Einrichtung zur Unterstützung von Arbeitsabläufen. Die Einrichtung steuert einen Lichtstrahl, mit dessen Hilfe jeweils Orte kenntlich gemacht werden, an denen Arbeitsschritte ausgeführt werden sollen. Diese Arbeitsschritte können beispielsweise darin bestehen, ein Lagergut zu entnehmen oder an einem bestimmten Ort abzustellen.

Der Erfindung liegt die **Aufgabe** zugrunde, ein Lagerregal der eingangs genannten Art vorzuschlagen, bei der die Auswahl des zu entnehmenden Lagergutes verbessert ist.

Zur **Lösung** dieser Aufgabe wird ein Lagerregal gemäß Patentanspruch 1 vorgeschlagen.

Vorteilhafte Ausgestaltungen der Erfindung sind Gegenstand der Unteransprüche.

Bei dem erfindungsgemäßen Lagerregal ist das zu entnehmende Lagergut durch intuitives Zeigen auswählbar, ohne dass der Lagergutträger entnommen werden muss. Ebenso ist es nicht notwendig, das gewünschte Lagergut aus einer Liste oder einem ähnlich abstrakten Medium auszuwählen. Eine derartige direkte Anwahl ist wesentlich bedienungsfreundlicher als digitale Informationen oder Tabellen. Des Weiteren kann der Bediener die Lagersituation in dem gesamten visualisierten Lagergutträger mit einem Blick erfassen. Das Zeigegerät ist zusammen mit der Anzeigeeinrichtung als Touchscreen ausgeführt. Dadurch erübrigt sich die Bereitstellung eines separaten Zeigegeräts, was insbesondere dann von Vorteil ist, wenn keine passende Auflagefläche, beispielsweise für eine Computermaus, verfügbar ist.

Weiterhin lässt sich vorteilhaft eine optische Hervorhebungseinheit vorsehen, die das ausgewählte Lagergut nach dem Verfahren des Lagergutträgers in die Beschickungs- und Entnahmeöffnung kennzeichnet.

Weitere Einzelheiten der Erfindung ergeben sich aus der nachfolgenden Beschreibung von Ausführungsbeispielen, die in schematischer Weise in der Zeichnung dargestellt sind. Hierin zeigen:
- Fig. 1: zeigt eine schematische Seitenansicht auf eine Ausführungsform eines Lagerregals, und
- Fig. 2: zeigt eine schematische Seitenansicht einer Ausführungsform ei- nes erfindungsgemäßen Lagerregals.

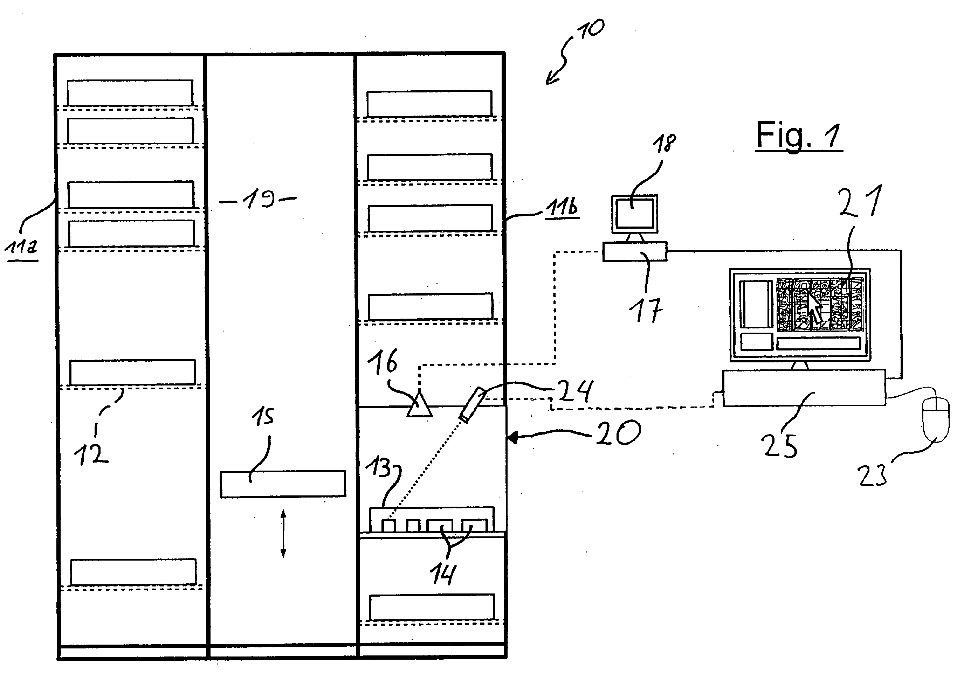

Die in Fig. 1 dargestellte Ausführungsform eines Lagerregals 10 weist zwei mit Abstand zueinander angeordnete Module 11 a, 11 b auf. Zwischen den Modulen 11a, 11b ist ein Förderraum 19 vorgesehen, in dem eine verfahrbare automatische Beschickungs- und Entnahmevorrichtung 15 angeordnet ist.

Die Module 11a, 11b weisen eine Vielzahl von beabstandeten paarweise angeordneten Trägerstützen 12 auf, die an gegenüberliegenden Seitenwänden angeordnet sind. Die Trägerstützen 12 dienen der Aufnahme von trogförmig ausgebildeten Lagergutträgern 13.

An dem Modul 11 b ist eine Beschickungs- und Entnahmeöffnung 20 vorgesehen, über die die Lagergutträger 13 zugeführt oder entnommen werden können. An der Oberseite der Öffnung 20 ist eine Digitalkamera 16 angeordnet, mit der das in dem Lagergutträger 13 aufgenommene Lagergut 14 erfassbar ist. Die von der Digitalkamera 16 erhaltenen Informationen werden einem Rechner 17 zugeleitet, in dem ein Bilderfasssungsprogramm abgespeichert ist. Das in dem Lagergutträger 13 aufgenommene Lagergut 14 kann dann ohne Entnahme des Lagergutträgers 13 auf der Anzeigeeinrichtung 21 des Arbeitsplatzrechners 25 angezeigt werden.

Anhand des über die Anzeigeeinrichtung 21, die beispielsweise durch einen Monitor realisiert ist, visuell dargestellten Lagergutträgers 13 kann mittels eines Zeigegeräts ein Lagergut 14 zur Entnahme ausgewählt werden. Als Zeigegerät ist in diesem Ausführungsbeispiel eine Computermaus 23 vorgesehen.

Nach der Anwahl des zu entnehmenden Lagerguts 14 wird der entsprechende Lagergutträger 13 über den Förderraum 19 mittels der verfahrbaren automatischen Beschickungs- und Entnahmevorrichtung 15 in die Öffnung 20 verschoben.

Sobald der Lagergutträger 13 in der Öffnung 20 angekommen ist, kann das zuvor mittels der Computermaus 23 ausgewählte Lagergut 14 mittels einer optischen Hervorhebungseinheit 24 zur leichteren Auffindbarkeit markiert werden.

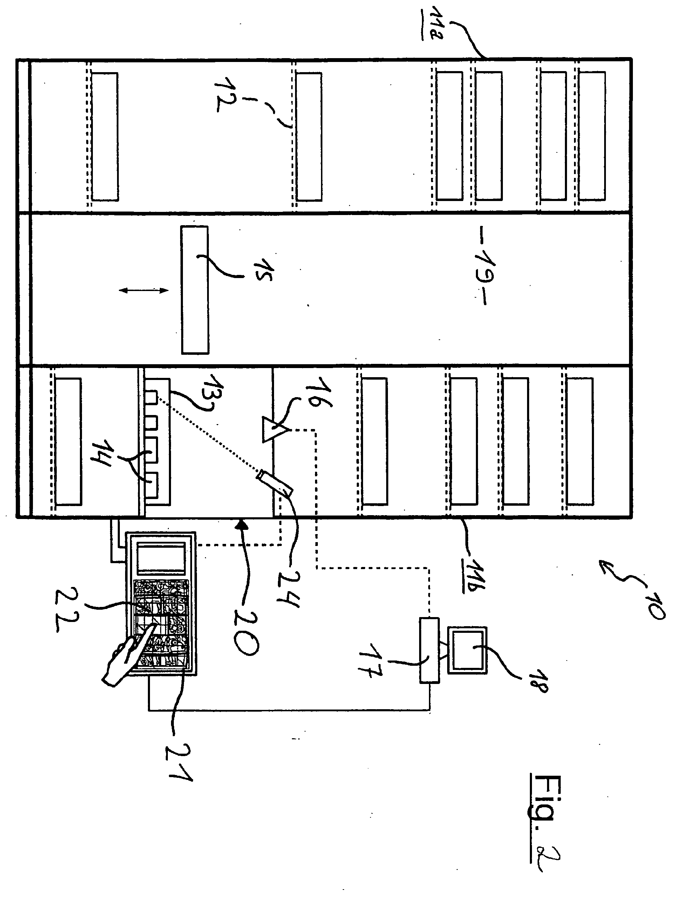

In Fig. 2 ist ein Ausführungsbeispiel eines erfindungsgemäßen Lagerregals gezeigt. Dieses Ausführungsbeispiel unterscheidet sich durch die Ausgestaltung des Zeigegerätes.

In dem zweiten Ausführungsbeispiel ist das Zeigegerät mit der Anzeigeeinrichtung 21 in der Art eines Touchscreens 22 kombiniert. Dadurch ist es nicht mehr notwendig, ein separates Zeigegerät vorzusehen.

Ebenso ist es nicht mehr notwendig, den Gebrauch eines Zeigegeräts zu erlernen. Ein Lagergut 14 wird vielmehr durch intuitives Tippen mit der Hand ausgewählt.

Die Erfindung zeichnet sich also dadurch aus, dass durch die intuitive Anwahl eines zu entnehmenden Lagergutes 14 über eine vorteilhafte Kombination von Anzeigeeinrichtung 21 und Touchscreen 22 effizienter und zügiger durchgeführt werden kann. Ebenso wird das Auffinden des gewünschten Lagergutes 14 erleichtert.

### Bezugszeichenliste

- 10: Lagerregal
- 11a/b: Modul
- 12: Trägerstütze
- 13: Lagergutträger
- 14: Lagergut
- 15: Beschickungs- und Entnahmevorrichtung
- 16: Digitalkamera
- 17: Rechner (Steuerrechner)
- 18: Anzeigeeinrichtung (Monitor)
- 19: Förderraum
- 20: Beschickungs- und Entnahmeöffnung
- 21: Anzeigeeinrichtung (Monitor des Touchscreens 22)
- 22: Touchscreen
- 23: Computermaus
- 24: optische Hervorhebungseinheit
- 25: Arbeitsplatzrechner

## Patentansprüche

1. Lagerregal (10) mit einer Vielzahl von übereinander angeordneten Trägerstützen (12) zur Abstützung von Lagergutträgern (13), die mittels einer automatischen Beschickungs- und Entnahmevorrichtung (15) förderbar sind, mit mindestens einer Beschickungs- und Entnahmeöffnung (20) zur Zuführung und Entnahme der Lagergutträger (13) und mit einem Rechner (17), in dem Informationen über das eingelagerte Lagergut (14) abgespeichert sind, wobei mindestens eine Digitalkamera (16) vorgesehen ist, die das in den Lagergutträgern (13) aufgenommene Lagergut (14) erfasst und wobei die digitalen Bildinformationen in dem Rechner (17) abgespeichert und mittels einer Anzeigeeinrichtung (21) anzeigbar sind, **dadurch gekennzeichnet, dass** der Anzeigeeinrichtung (21) ein Zeigegerät (22) beigeordnet ist, das als Touchscreen (22) zusammen mit einem Monitor (21) ausgeführt ist und mit dem zu entnehmendes Lagergut (14) anhand der digitalen Bildinformationen des visuell dargestellten Lagergutträgers (13) auswählbar ist.

2. Lagerregal (10) nach Anspruch 1 **dadurch gekennzeichnet,**
**dass** eine optische Hervorhebungseinheit (24) vorgesehen ist, die das vorher ausgewählte Lagergut (14) nach dem Verfahren des Lagergutträgers (13) in die Beschickungs- und Entnahmeöffnung (20) kennzeichnet.

3. Lagerregal (10) nach Anspruch 2, **dadurch gekennzeichnet, dass** die optische Hervorhebungseinheit (24) das Lagergut (14) mittels eines lenkbaren Laserstrahls kennzeichnet.

4. Lagerregal (10) nach Anspruch 2, **dadurch gekennzeichnet, dass** die optische Hervorhebungseinheit (24) das Lagergut (14) mittels LED-Licht kennzeichnet.

## Claims

1. Storage rack (10) having a plurality of support beams (12) arranged one upon the other for supporting goods containers (13) which can be conveyed using an automated apparatus (15) for loading and unloading, at least one loading and unloading opening (20) for feeding and removing of the goods containers (13), and a computer (17), where data about the stocked goods (14) is saved, wherein at least one digital camera (16) that records the goods (14) fed into the goods container (13) is provided and wherein the digital image information is saved by the computer (17) and can be displayed using a display unit (21), **characterized in that** the display unit (21) is associated to a pointing device (22), which is implemented as a touch screen (22) in conjunction with a monitor (21) and with which goods (14) to be unloaded are selectable based on the digital image information of the visually displayed goods container (13).

2. Storage rack (10) according to claim 1, **characterized in that** an optical highlighting unit (24) labelling the previously selected goods (14) after moving the goods container (13) in the port (20) for loading and unloading is provided.

3. Storage rack (10) according to claim 2, **characterized in that** the optical highlighting unit (24) labels the goods (14) using a controllable laser beam.

4. Storage rack (10) according to claim 2, **characterized in that** the optical highlighting unit (24) labels the goods (14) using a LED light.

## Revendications

1. Rayonnage de stockage (10) comprenant une pluralité de montants porteurs (12) agencés les uns au-dessus des autres pour soutenir des supports d'articles à stocker (13), lesquels peuvent être convoyés au moyen d'un appareil automatique de chargement et d'enlèvement (15), et au moins une ouverture de chargement et d'enlèvement (20) pour l'amenée et l'enlèvement des supports d'articles à stocker (13), et comprenant un ordinateur (17) dans lequel sont mémorisées des informations concernant les articles à stocker (14) stockés, dans lequel il est prévu au moins une caméra numérique (16) qui détecte les articles à stocker (14) reçus par les supports d'article de stockage (13), et les informations d'images numériques sont mémorisées dans l'ordinateur (17) et peuvent être affichées au moyen d'un dispositif d'affichage (21), **caractérisé en ce qu'**un appareil de saisie (22) est associé au dispositif d'affichage (21), réalisé sous forme d'écran tactile (22) ensemble avec un moniteur (21), et au moyen duquel les articles à stocker (14) sont susceptibles d'être choisis au moyen des informations d'images numériques du support d'articles à stocker (13) représenté visuellement.

2. Rayonnage de stockage (10) selon la revendication 1,
**caractérisé en ce qu'**il est prévu une unité de caractérisation optique (24), qui caractérise les articles à stocker (14) auparavant choisis après le déplacement du support d'articles à stocker (13) dans l'ouverture de chargement et d'enlèvement (20).

3. Rayonnage de stockage (10) selon la revendication 2,
**caractérisé en ce que** l'unité de caractérisation optique (24) caractérise les articles à stocker (14) au moyen d'un rayon laser dirigeable.

4. Rayonnage de stockage (10) selon la revendication 2,
**caractérisé en ce que** l'unité de caractérisation optique (24) caractérise les articles à stocker (14) au moyen d'une lumière venant de diodes électroluminescentes.
